Europäisches Patentamt

European Patent Office

Office européen des brevets

(11) Publication number: **0 437 927 A2**

# EUROPEAN PATENT APPLICATION

(21) Application number: 90312446.9

(51) Int. Cl.5: **A23G 3/00**

(22) Date of filing: **15.11.90**

| | |
|---|---|
| The title of the invention has been amended (Guidelines for Examination in the EPO, A-III, 7.3).<br><br>(30) Priority: **30.11.89 US 444898**<br><br>(43) Date of publication of application:<br>**24.07.91 Bulletin 91/30**<br><br>(84) Designated Contracting States:<br>**BE CH DE DK ES FR GB GR IT LI NL SE** | (71) Applicant: **WARNER-LAMBERT COMPANY**<br>**201 Tabor Road**<br>**Morris Plains New Jersey 07950(US)**<br><br>(72) Inventor: **Graff, Allan H.**<br>**8 Blue Fern Lane**<br>**Randolph, New Jersey 07869-5805(US)**<br>Inventor: **Calayan, Carolina**<br>**40 Holly Drive**<br>**Morris Plains, New Jersey 07950(US)**<br><br>(74) Representative: **Jones, Michael Raymond et al**<br>**HASELTINE LAKE & CO. Hazlitt House 28**<br>**Southampton Buildings Chancery Lane**<br>**London WC2A 1AT(GB)** |

(54) **Hard candy confection having delayed effervescence and its production.**

(57) A hard candy confection is disclosed which offers an extended effervescent reaction and improved shelf stability, by the incorporation of separate reactive components achieving an in situ neutralization and effervescent reaction within the candy on its consumption. The respective ingestible reactive acid component and ingestible reactive base component are incorporated into separate portions of the candy base, and the resulting portions are thereafter positioned adjacent each other, and may be further incorporated one into the other. The ingestible reactive acid component may comprise citric acid and the ingestible reactive base component may comprise sodium bicarbonate. The separation of these reactive components in the resulting hard candy promotes a controlled release of the effervescent sensation with a corresponding improvement in shelf stability.

EP 0 437 927 A2

# HARD CANDY CONFECTION HAVING CONTROLLED RELEASE EFFERVESCENCE AND ITS PRODUCTION

The present invention relates to confections known as hard or boiled candies, and more particularly to hard candies exhibiting effervescent sensation.

Over the years, numerous comestible and confectionery products have been developed that offer some form of effervescent sensation. In general, the sensation is best described as a fizzing action, comparable to one experienced when a carbonated beverage is consumed.

Initially, effervescent confections comprised gasified candies which in turn, were hard candies containing a gas such as carbon dioxide. The preparation of such candies is disclosed in U.S.' Patent Nos. 3,012,893 to Kremzner et als; 3,985,909 and 3,985,910 to Kirkpatrick; and 4,001,457 to,Hegadorn, all of the foregoing reviewed in U.S. Patent No. 4,289,790 to Bruelle, the disclosure of which is incorporated herein by reference. As indicated therein, candies of this type were prepared by a process comprising the melting of crystalline sugar and the application to the sugar of a gas such as carbon dioxide at a pressure of from 50 to 1,000 psi for a period of time sufficient to incorporate into the candy mass a quantity of about 0.5 to 15 ml of gas per gram of candy. Subsequently, the candy mass is cooled thereby entraining the $CO_2$ gas therein.

French Patent No. 1,573,397 to Unilever N.V. discloses the production of an in situ effervescent system incorporated in a comestible including granules of effervescent particles disposed within a frozen confection, whereby the reaction between the acid and the base material results in the formation of $CO_2$.

The preparation of effervescent products thus proceeds in these two directions, i.e. by direct gasification, or by the preparation of the reactive components within the confection to promote the in situ reaction upon consumption of the confection. In both instances, however, the effervescent sensation is favorably intense but undesirably brief. In the instance of direct gasification, the products in question either contain or absorb moisture with the result that certain of the entrained gas is lost before the product is consumed. To this end, manufacturers have sought to develop moisture-proof packaging for such products to attempt to inhibit this "leaching" effect.

In the instance of products prepared by the incorporation of separate reactive components into the confection, this system too, suffers certain drawbacks inasmuch as the intimate admixture of the materials containing the respective reactive components enables the moisture within the confection to cause the slow premature' reaction of the components with the result that the level of effervescence in the product on consumption is substantially reduced. Likewise in this instance, manufacturers have sought to maintain their products under conditions of controlled humidity and to correspondingly package their products in an effort to inhibit the adsorption of further moisture after product preparation.

The measures employed thus far have proved to be of limited success and offer correspondingly increased expense and complexity to the manufacturing process for these confections. A need therefore exists for the development of a confection which will exhibit an extended effervescent sensation and corresponding stability.

According to one aspect of the present invention, there is provided a hard candy confection having controlled effervescence comprising a hard candy base, an ingestible reactive acid component and an ingestible reactive base component reactive with the ingestible acid component to cause effervescence, the reactive acid component and the reactive base component each being incorporated in the candy base,

wherein the candy base is divided into at least two separate portions during the preparation of the hard candy confection, and each of the reactive acid component and the reactive base component are thoroughly incorporated in different separate portions of the candy base, and

wherein the separate portions are thereafter combined with each other to form the confection, whereby the reactive acid component and the reactive base component remain separated from each other therein.

Preferably the separate portions are combined in stacked relationship with each other.

The ingestible reactive acid component may be selected from non-toxic organic acids, non-toxic mineral acids, the salts thereof, carbonic acid, amino acid hydrochlorides and mixtures thereof, with exemplary materials comprising citric acid, phosphoric acid, hydrochloric acid, glucono delta lactone, and the like. Correspondingly, the ingestible reactive base component may comprise a material selected from the group consisting of alkali metal and alkali carbonates and bicarbonates, with sodium carbonate and sodium bicarbonate as exemplary. A particular effervescent system would include citric acid as the ingestible reactive acid component and sodium carbonate as the ingestible reactive base component.

There is also provided a hard candy base which generally is selected from various sugars such as sucrose, glucose, fructose, lactose, polydextrose, sugar alcohols, corn syrup (containing glucose, maltose and dextrin) hydrolyzed starches, honey and mixtures.

The confection may also include material selected from sweeteners, flavourings, colourings and mixtures thereof.

According to another aspect of the present invention, there is provided a process for producing a hard candy confection having controlled effervescence and improved shelf stability, comprising:

a) preparing a quantity of a hard candy base;

b) dividing the hard candy base into at least two portions;

c) incorporating in a first portion of the hard candy base an ingestible reactive acid component;

d) incorporating in a second and separate portion of the hard candy base an ingestible reactive base component;

e) placing the candy base portions of steps c) and d) against each other and further processing thereof to combine them; and

f) treating the resulting mass to form the final hard confection.

There is also provided a process wherein the ingestible reactive acid component and the ingestible reactive base component are each respectively incorporated in two separate portions of the candy base by the respective hand pulling thereof until uniform mixture is achieved. The portions of the hard candy base may be further processed by hand pulling to achieve a full and uniform mixture each with the other.

The confection prepared in accordance with the present invention maintains a separation between the respective reactive components that prevents premature reaction and effervescence during storage before consumption. Correspondingly, the confection offers a controlled and sustained desirable level of effervescent sensation when consumed, as the separation between the respective reactive components is variable in the final product and thereby contributes to extension of the sensation. In addition, the present product is so prepared that moisture-proof packaging, while optional, is not strictly necessary. Moreover, the nature of the present manufacture is of relative simplicity and thereby does not add undue expense to the resulting product.

The present invention can provide any or all of the following advantages:

a confectionery product having improved effervescent properties;

a confectionery product as aforesaid that exhibits correspondingly improved shelf stability;

a confectionery product as aforesaid comprising a hard candy confection that offers a controlled and sustained release of effervescent sensation; and

a confectionery product as aforesaid that is simple and economical to manufacture.

The hard candy confection of the present invention includes an effervescence system comprising an ingestible reactive acid component and an ingestible reactive base component reactive with each other in a conventional neutralization reaction which results in the generation of a gaseous by-product such as $CO_2$. The effervescence system per se, although known, is, as noted earlier, subject to certain drawbacks as heretofore employed, as the respective components were disposed adjacent each other and in matrix materials which contained moisture and easily adsorbed additional moisture with the result that a steady "leaching" or low level premature effervescence would take place in the product before consumption.

Accordingly, the present invention contemplates the placement of the respective acid and base components in individual portions of the candy base and the complete incorporation of such components respectively therein, to achieve a separation of the components that unexpectedly confers the desired improved properties therein. Thus, the candy base is formulated, divided into two or more separate portions and thereafter the respective acid and base components are each incorporated into separate portions. Subsequently, the respective portions are brought together (preferably in conventional stacked relationship) and further processed conjointly to complete the formation of the final confection.

As noted earlier, a candy base useful in accordance with the present invention may be prepared from a variety of well known materials including the commercially available sugars employed in the confectionery industry. Thus, such sugars as sucrose, glucose, fructose, lactose, polydextrose, sugar alcohols such as mannitol, sorbitol, lactitol, and maltitol, corn syrup (containing glucose, maltose and dextrin), hydrolyzed starches, such as Lycasin or Hi-Star, high fructose corn syrup, or honey, alone or in any combination may be employed herein.

For example, and as indicated in U.S. Patent No. 4,289,790, referred to earlier herein and incorporated herein by reference, one may employ a combination of sucrose and lactose in a mixture of 30% lactose and' 70% sucrose, to yield a product having reduced hygroscopicity and stickiness during storage. Likewise, sucrose used in combination with corn syrup, and the sugar materials may be heated to caramelize them somewhat, all depending upon the exact nature of the candy product to be prepared. For example, fine granulated sugar and corn syrup, or their respective alternates, may be prepared in mixtures containing from about 40% to about 90% of the sugar, and from about 10% to about 60% of the corn syrup.

The candy base may likewise include a variety of additives such as flavours colourants and optional natural and synthetic sweeteners, all within amounts conventionally employed for confections of this type. Thus, various fruit and vegetable oil essences, nut-derived essences, bean-derived essences and the like may be incorporated herein to serve as the flavour component, and may be utilized herein either in their free form or in an encapsulated form. Likewise, artificial sweeteners such as saccharin, and the dipeptide sweeteners such as aspartame may be employed together with material such as sorbitol to further augment the candy base herein. The exact amounts of such additional materials may vary in accordance with the skill of the art.

The ingestible reactive acid component may be selected from the group consisting of non-toxic organic acids, non-toxic mineral acids, their salts, carbonic acid, amino acid hydrochloride, and mixtures. More particularly, the reactive acid component may be selected from the group consisting of citric acid, malic acid, fumaric acid, lactic acid, tartaric acid, succinic acid, glutamic acid, malonic acid, butyric acid, lactic acid, adipic acid, glucono delta lactone, hydrochloric acid, phosphoric acid including suitable non-toxic organophosphoric acid salts, acetyl salicylic acid, salts thereof and mixtures are all useful herein.

Correspondingly, the ingestible reactive base component of the present invention may be a material selected from the group consisting of alkali metal carbonates, alkali metal bicarbonates, alkali carbonates, alkali bicarbonates and mixtures thereof, and more particularly may be selected from sodium carbonate, potassium carbonate, magnesium carbonate, calcium carbonate, sodium bicarbonate, potassium bicarbonate, magnesium bicarbonate, calcium bicarbonate, and the like.

The respective acid and base components listed herein are merely exemplary, as other ingestible reactive acids and bases are contemplated within the scope of the present invention and the foregoing list is accordingly not intended to be limitative hereof. Likewise, the exact amounts of each of the components in relation to each other may vary somewhat depending upon the solubility and stability of the respective acids and bases selected, it' being understood that the exact quantities of each reactive component should be approximately equivalent reaction weights so as to achieve a complete and maximal neutralization reaction and corresponding effervescent sensation.

The preparation of the confectionery product of the present invention proceeds by the initial preparation of the candy base and the incorporation therein of the various ingredients other than the reactive acid and reactive base components. Thus, the candy base is' prepared for final formation save the inclusion of the respective reactive components, and is then divided into plural separate portions thereof. Thereafter, each of the reactive components is separately incorporated into individual portions and the portions are then processed to achieve complete incorporation and inclusion of the reactive components therein. Such processing is known in the art as "pulling" and constitutes the literal hand stretching of the candy base mass to uniformly blend the ingredients therein. In this instance, such hand pulling causes the reactive components to be uniformly incorporated within their respective candy base portions.

After such incorporation of the respective components into the candy base portions is complete, the individual portions may then be brought together. Particularly, the portions are stretched out into "flat sheets" which may then be laid one on top of the other. Generally, the candy base is maintained during this procedure at a somewhat elevated temperature to assure its plasticity and resulting processability. Thus, the plastic candy base mass is laid-out adjacent to a heating source maintaining the mass at an elevated temperature and the stacked material resulting from the combination of the respective separate portions of the base as indicated is then further hand pulled or equivalently processed to result in a full and uniform blending of the respective portions together with each other. Once this further uniform blending is complete, the resulting candy base is set in accordance with conventional procedures to form the various final hard candy products. For example, the base may then be laid cut in a flat pan and cooled followed by the punching, cutting or the like of the final confection material into appropriate candy size and shape.

The packaging of the confection after processing is complete does not require the use of moisture impervious materials in view of the surprising shelf stability achieved by the present invention. Naturally, such moisture resistant packaging may optionally be employed, whereupon further improvement in shelf stability will undoubtedly be achieved. Accordingly, such materials as clear plastic, waxed paper, foil-plastic or foil-paper composites as are well known in the art may be employed herein.

The present invention will be further understood from a review of the following illustrative example wherein all percentages as stated are percent by weight unless otherwise indicated.

EXAMPLE I
_____

Conventional candy base prepared from a combination of sucrose and corn syrup is prepared, together with flavoring and a colorant. More particularly, the base is prepared with 600 grams of fine granulated sugar, 500 grams of corn syrup with 80% solids, 3 grams of flavor and 8 grams of a 5% color solution. The resulting base material is cooked in an open kettle at a temperature of from 280°F to 300°F and fully kneaded to achieve the uniform incorporation of all ingredients therein.

A portion of the candy base comprising 1000 grams thereof is divided into approximately two equal parts. To a first half of the candy base batch, 55 grams of anhydrous granular citric acid is added, and the resulting portion of the base is then pulled by hand until all of the citric acid is incorporated therein. To the other half of the candy base batch, 45 grams of sodium bicarbonate is added, and this portion is likewise pulled by hand until all of the sodium bicarbonate is incorporated therein uniformly. Subsequently, the portion of the batch containing the citric acid component is placed flat on a slab connected to a water bath set at 80°C. Thereafter, the portion of the candy base containing the sodium bicarbonate fully incorporated therein is placed on top of the first mentioned portion. The combined portions thus stacked are then pulled together by hand until uniform mixing of the resulting mass is achieved.

Thereafter, the mass is further processed in accordance with conventional procedures with formation into individual candy portions followed by final cooling before packaging.

The candy portions prepared above were stored in glass jars at room temperature. After 14 months of storage, the materials thus prepared were tested by an expert panel and were found to have good effervescence. These results represent a substantial improvement in longevity of effervescent reaction upon consumption, and corresponding shelf stability over candies made in accordance with known procedures.

This invention may be embodied in other forms or carried out in other ways without departing from the spirit or essential characteristics thereof. The present disclosure is therefore to be considered as in all respects illustrative and not restrictive, the scope of the invention being indicated by the appended Claims, and all changes which come within the meaning and range of equivalency are intended to be embraced therein.

**Claims**
**CLAIMS for the designated states BE, DK, FR, DE, GR, IT, NL, SE, CH AND GB:-**

1. A hard candy confection having controlled effervescence comprising a hard candy base, an ingestible reactive acid component and an ingestible reactive base component reactive with the ingestible acid component to cause effervescence, the reactive acid component and the reactive base component each being incorporated in the candy base,

   wherein the candy base is divided into at least two separate portions during the preparation of the hard candy confection, and each of the reactive acid component and the reactive base component are thoroughly incorporated in different separate portions of the candy base, and

   wherein the separate portions are thereafter combined with each other to form the confection, whereby the reactive acid component and the reactive base component remain separated from each other therein.

2. A hard candy confection according to claim 1, wherein thee separate portions are combined in stacked relationship with each other.

3. A hard candy confection according to claim 1 or 2, wherein the ingestible reactive acid component is selected from non-toxic organic acids, non-toxic mineral acids, the salts thereof, carbonic acid, amino acid hydrochlorides, and mixtures thereof.

4. A hard candy confection according to claim 3, wherein the ingestible reactive acid component is selected from citric acid, malic acid, fumaric acid, lactic acid, tartaric acid, succinic acid, glutamic acid, malonic acid, butyric acid, lactic acid, adipic acid, glucono delta lactone, hydrochloric acid, phosphoric acid, non-toxic organophosphoric acid salts, acetyl salicylic acid, salts thereof, and mixtures thereof.

5. A hard candy confection according to any preceding claim, wherein the ingestible reactive base component is selected from alkali metal carbonates, alkali metal bicarbonates, alkali carbonates, alkali bicarbonates, magnesium bicarbonate, calcium bicarbonate, and mixtures thereof.

6. A hard candy confection according to claim 5, wherein the ingestible reactive base component is selected from sodium carbonate, potassium carbonate, magnesium carbonate, calcium carbonate, sodium bicarbonate, potassium bicarbonate, magnesium bicarbonate, calcium bicarbonate and mixtures thereof.

7. A hard candy confection according to claim 1 or 2, wherein the ingestible reactive acid component comprises citric acid and the ingestible reactive base component comprises sodium bicarbonate.

8. A hard candy confection according to any preceding claim, wherein the ingestible reactive acid component and the ingestible reactive base component are present in approximately equivalent reaction weights to achieve complete neutralization and exhaustion of each other during the generation of the effervescent reaction.

9. A hard candy confection according to any preceding claim, wherein the hard candy base is prepared from a material selected from sucrose, fructose, glucose, lactose, polydextrose, mannitol, sorbitol, lactitol, maltitol, corn syrup, high fructose corn syrup, hydrolyzed starch, honey, and mixtures thereof.

10. A hard candy confection according to any preceding claim, which also includes material selected from sweeteners, flavourings, colourings and mixtures thereof.

11. A process for producing a hard candy confection having controlled effervescence and improved shelf stability, comprising:
    a) preparing a quantity of a hard candy base;
    b) dividing the hard candy base into at least two portions;
    c) incorporating in a first portion of the hard candy base an ingestible reactive acid component;
    d) incorporating in a second and separate portion of the hard candy base an ingestible reactive base component;
    e) placing the candy base portions of steps c) and d) against each other and further processing thereof to combine them; and
    f) treating the resulting mass to form the final hard confection.

12. A process according to claim 11, wherein the candy base portions of steps c) and d) are placed against each other in a stacked relationship prior to being combined.

13. A process according to claim 11 or 12, wherein hard candy base is divided into two separate portions.

14. A process according to claim 11, 12 or 13 wherein the ingestible reactive acid component and the ingestible reactive base component are each respectively incorporated in two separate portions of the candy base by the respective hand pulling thereof until uniform mixture is achieved.

15. A process according to any one of claims 11 to 14, wherein the portions of the hard candy base are further processed by hand pulling to achieve a full and uniform mixture each with the other.

16. A process according to any one of claims 11 to 15, for producing a hard candy confection according to any one of claims 1 to 10.

**CLAIMS for the designated state ES**

1. A process for producing a hard candy confection having controlled effervescence which comprises incorporating an ingestible reactive acid component and an ingestible reactive base component, reactive with the ingestible acid component to cause effervescence, in a hard candy base,
    wherein the candy base is divided into at least two separate portions during the preparation of the hard candy confection, and each of the reactive acid component and the reactive base component are thoroughly incorporated in different separate portions of the candy base, and
    wherein the separate portions are thereafter combined with each other to form the confection, whereby the reactive acid component and the reactive base component remain separated from each other therein.

2. A process for producing a hard candy confection according to claim 1, wherein the separate portions are combined in stacked relationship with each other.

3. A process for producing a hard candy confection according to claim 1 or 2, wherein the ingestible reactive acid component is selected from non-toxic organic acids, non-toxic mineral acids, the salts thereof, carbonic acid, amino acid hydrochlorides, and mixtures thereof.

4. A process for producing a hard candy confection according to claim 3, wherein the ingestible reactive acid component is selected from citric acid, malic acid, fumaric acid, lactic acid, tartaric acid, succinic acid, glutamic acid, malonic acid, butyric acid, lactic acid, adipic acid, glucono delta lactone, hydrochloric acid, phosphoric acid, non-toxic organophosphoric acid salts, acetyl salicylic acid, salts thereof, and mixtures thereof.

5. A process for producing a hard candy confection according to any preceding claim, wherein the ingestible reactive base component is selected from alkali metal carbonates, alkali metal bicarbonates, alkali carbonates, alkali bicarbonates, and mixtures thereof.

6. A process for producing a hard candy confection according to claim 5, wherein the ingestible reactive base component is selected from sodium carbonate, potassium carbonate, magnesium carbonate, calcium carbonate, sodium bicarbonate, potassium bicarbonate, magnesium bicarbonate, calcium bicarbonate and mixtures thereof.

7. A process for producing a hard candy confection according to claim \1 or 2, wherein the ingestible reactive acid component comprises citric acid and the ingestible reactive base component comprises sodium bicarbonate.

8. A process for producing a hard candy confection according to any preceding claim, wherein the ingestible reactive acid component and the ingestible reactive base component are present in approximately equivalent reaction weights to achieve complete neutralization and exhaustion of each other during the generation of the effervescent reaction.

9. A process for producing a hard candy confection according to any preceding claim, wherein the hard candy base is prepared from a material selected from sucrose, fructose, glucose, lactose, polydextrose, mannitol, sorbitol, lactitol, maltitol, corn syrup, high fructose corn syrup, hydrolyzed starch, honey, and mixtures thereof.

10. A process for producing a hard candy confection according to any preceding claim, which also includes material selected from sweeteners, flavourings, colourings and mixtures thereof.

11. A process for producing a hard candy confection according to any preceding claim having controlled effervescence and improved shelf stability, using the following steps:
    a) preparing a quantity of a hard candy base;
    b) dividing the hard candy base into at least two portions;
    c) incorporating in a first portion of the hard candy base an ingestible reactive acid component;
    d) incorporating in a second and separate portion of the hard candy base an ingestible reactive base component;
    e) placing the candy base portions of steps c) and d) against each other and further processing thereof to combine them; and
    f) treating the resulting mass to form the final hard confection.

12. A process according to claim 11, wherein the candy base portions of steps c) and d) are placed against each other in a stacked relationship prior to being combined.

13. A process according to claim 11 or 12, wherein hard candy base is divided into two separate portions.

14. A process according to claim 11 or 12, wherein the ingestible reactive acid component and the ingestible reactive base component are each respectively incorporated in two separate portions of the candy base by the respective hand pulling thereof until uniform mixture is achieved.

15. A process according to any one of claims 11 to 14, wherein the portions of the hard candy base are further processed by hand pulling to achieve a full and uniform mixture each with the other.

16. A process according to any one of claims 11 to 15, for producing a hard candy confection according to any one of claims 1 to 10.